# EUROPEAN PATENT APPLICATION

(11) **EP 1 798 105 A1**
(43) Date of publication of application: **20.06.2007**
(21) Application number: 04792217.4
(22) Date of filing: 08.10.2004
(51) Int. Cl.: B60R 1/072

(54) **MIRROR ANGLE ADJUSTING DEVICE**

(71) Applicant: Murakami Corporation, Shizuoka-shi Shizuoka 422-8569 (JP)
(72) Inventor: SUZUKI, Hisaya, MURAKAMI CORPORATION, Fujieda-shi, Shizuoka 4260053 (JP); FUKAI, Akira, MURAKAMI CORPORATION, Fujieda-shi, Shizuoka 4260053 (JP)
(74) Representative: Gill, Stephen Charles
(86) International application number: PCT/JP2004/014948
(87) International publication number: WO 2006/040800

(57) **Abstract**

A mirror angle adjusting device can stably hold a pivot plate (H), while a contact part between the pivot plate (H) and an actuator (A) smoothly slides for a long period of time. The mirror angle adjusting device includes the pivot plate (H) attached to a back side of a mirror (M), and the actuator (A) for holding the pivot plate (H) . In the mirror angle adjusting device, grooves (121a) for storing a lubricant are formed on a support surface of the actuator (A), and grooves (311) for storing a lubricant are formed on a sliding surface of the pivot plate (H) which is slidably in contact with the support surface. In the mirror angle adjusting device, the contact part between the pivot plate (H) and the actuator (A) can smoothly slide for a long period of time, and the pivot plate (H) can be stably held.

## Description

### FIELD OF THE INVENTION

The present invention relates to a mirror angle adjusting device.

### BACKGROUND ART

A mirror angle adjusting device for holding a mirror so that the mirror is freely inclinable is built in a rear-view outer mirror provided on a lateral side of an automobile, as described in, for example, Japanese Laid-Open Patent Application, Publication No. 2004-161123.

The mirror angle adjusting device described in Japanese Laid-Open Patent Application Publication No. 2004-161123 is, as shown in FIG. 13, mounted on a back side of a mirror M (on a front side face of a vehicle), and includes a pivot plate Hc for holding the mirror M via a mirror holder Mh, and an actuator Ac for holding the pivot plate Hc so that it is freely inclinable.

The actuator Ac includes an annular receiving part P having an inner circumferential surface molded in a spherical shape; and rods Q for pushing and pulling the pivot plate Hc. Though not shown in the drawings, a motor for providing a driving force to the rods Q, and each gear for transmitting the driving force of the motor to the rods Q are provided inside the actuator Ac.

The pivot plate Hc is provided with an annular sliding part P' slidably held in the receiving part P, and a pair of engaging parts (not shown) with which a tip of each rod Q is engaged.

When the rod Q is moved forward and backward by controlling a direction and a speed of rotation of the motor, the pivot plate Hc is inclined in relation to the actuator Ac.

In the meantime, to ensure a smooth inclining movement of the pivot plate Hc, a lubricant such as grease is applied onto an inner circumferential surface (a support surface) of the receiving part P of the actuator and an outer circumferential surface (a sliding surface) of the pivot plate. There is, however, a concern that the lubricant is used up, after the pivot plate Hc is used for a long period of time.

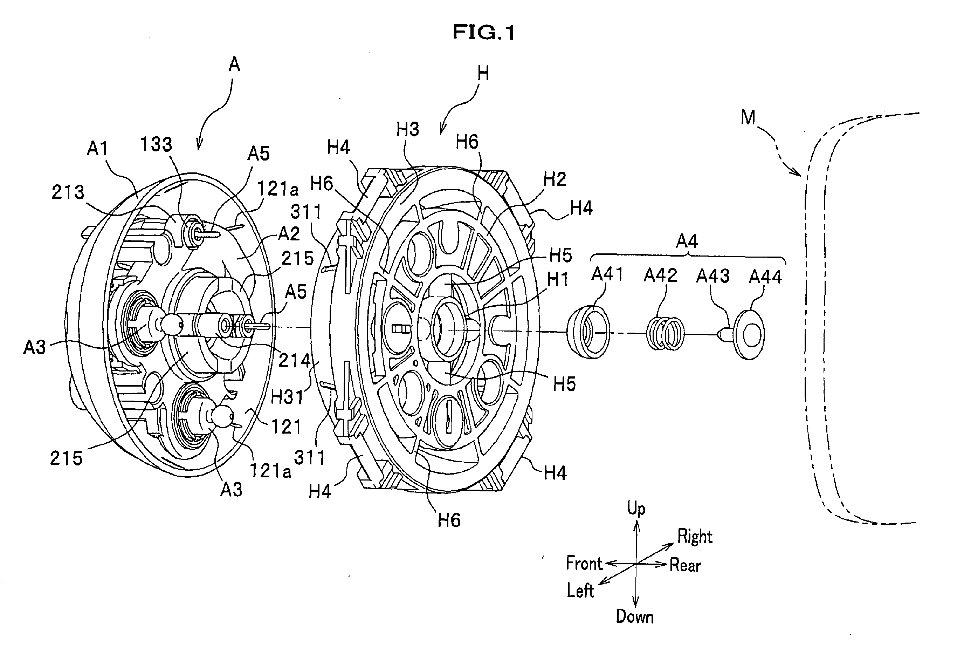

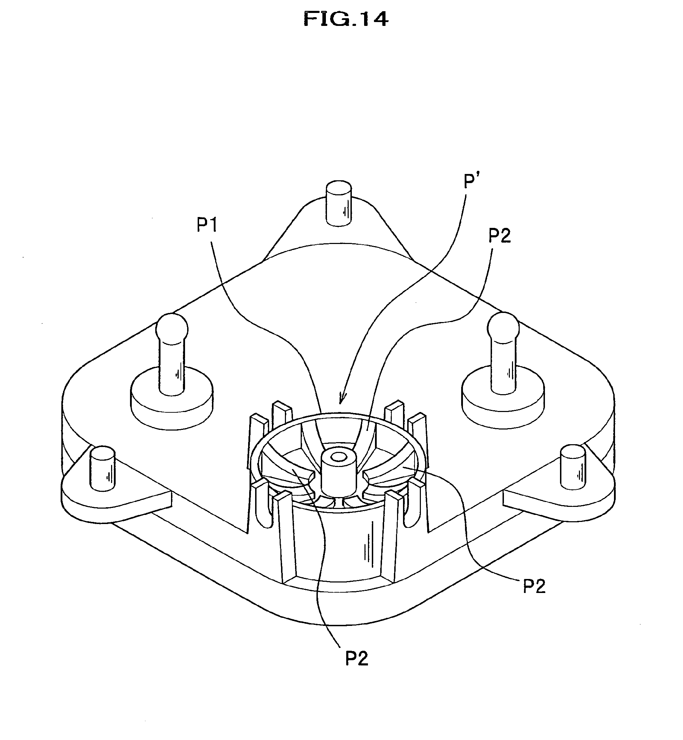

As a measure to solve the problem described above, Japanese Laid-Open Patent Application Publication No. 2002-316582 (paragraphs 0025-0027, FIG. 1) describes, as shown in FIG. 14, a mirror angle adjusting device with a configuration in which a plurality of plate-like ribs P2 are placed inside a cylindrical peripheral wall P1 to form a receiving part P' so as to store a lubricant between the ribs P2, P2 adjacent to each other.

However, the mirror angle adjusting device according to Japanese Laid-Open Patent Application, Publication No. 2002-316582 is configured to line-support a sliding part of a pivot plate with the plurality of ribs. Such a configuration can easily cause variable levels of contact pressure as compared to a surface-support type mirror angle adjusting device, which is one of the reasons to generate chattering vibration.

Besides a contact part between the receiving part and the sliding part, the problem described above also applies to a contact part on which the actuator is slidably in contact with the pivot plate such as a contact part between an outer circumferential surface (a support surface) of a support cap for pressing the pivot plate toward the actuator and an inner circumferential surface (a sliding surface) of a housing part for housing the support cap.

### DISCLOSURE OF THE INVENTION

The inventors have hence carried out studies and developments to deal with the aforementioned problems with the conventional technology, and have finally made the present invention. That is, one aspect of the present invention is to provide a mirror angle adjusting device capable of stably holding a pivot plate, while a contact part between the pivot plate and an actuator smoothly slides for a long period of time.

More specifically, the mirror angle adjusting device as the one aspect of the present invention includes a pivot plate attached on a back side of a mirror; and an actuator slidably holding the pivot plate. The mirror angle adjusting device is characterized in that grooves for storing a lubricant are formed at least either on a support surface of the actuator or on a sliding surface of the pivot plate which is slidably in contact with the support surface.

In such a mirror angle adjusting device, the support surface of the actuator comes in contact plane-to-plane with the sliding surface of the pivot plate. This enables the pivot plate to be stably held. Additionally, since the grooves for storing a lubricant are formed at least either on the support surface or on the sliding surface, a sufficient amount of the lubricant can be fed between the support surface and the sliding surface (namely, on the contact part) . That is, in this mirror angle adjusting device, the contact part between the pivot plate and the actuator smoothly slides for a long period of time, and the pivot plate is stably held. The pivot plate used herein holds a mirror, and is attached directly on a back side of the mirror or indirectly via a mirror holder or the like.

If the actuator has an annular receiving part, and the pivot plate has an annular sliding part which is slidably in contact with the receiving part, a circumferential surface (an inner circumferential surface or an outer circumferential surface) of the receiving part operates as "a support surface", and a circumferential surface of the sliding part (an inner circumferential surface or an outer circumferential surface) operates as "a sliding surface".

If the actuator has a support cap for pressing the pivot plate toward the actuator, and the pivot plate has a housing part for housing the support cap, an outer circumferential surface of the support cap operates as "a support surface", and an inner circumferential surface of the housing part operates as "a sliding surface".

In a mirror angle adjusting device as another aspect of the present invention, a plurality of grooves are formed both on the support surface of the actuator and on the sliding surface of the pivot plate.

In the mirror angle adjusting device as described above, since the plurality of grooves are formed both on the support surface of the actuator and on the sliding surface of the pivot plate, a sufficient amount of a lubricant can be fed between the support surface and the sliding surface further surely.

If the plurality of grooves are formed both on the support surface of the actuator and on the sliding surface of the pivot plate, it is desirable that the grooves on the support surface are formed in positions displaced from the grooves formed on the sliding surface.

With this configuration, the plurality of grooves formed on the support surface and the plurality of grooves formed on the sliding surface can be alternately utilized. Thus, a sufficient amount of the lubricant can be efficiently fed between the support surface and the sliding surface.

In the mirror angle adjusting device according to the present invention, a lubricant storing part for storing a lubricant may be formed at least either on a portion adjacent to the support surface or on a portion adjacent to the sliding surface.

With this configuration, a sufficient amount of the lubricant can be fed between the support surface and the sliding surface. That is, in this mirror angle adjusting device, the contact part between the pivot plate and the actuator smoothly slides for a long period of time, and the pivot plate is stably held.

The lubricant storing part is preferably formed on a portion adjacent to the receiving part, if the actuator has an annular receiving part; the support surface is formed on the inner circumferential surface of the receiving part; the pivot plate has an annular sliding part which is slidably in contact with the receiving part; and the sliding surface is formed on the outer circumferential surface of the sliding surface.

With this configuration, a lubricant is fed onto the sliding surface of the sliding part and the support surface of the receiving part, every time the sliding surface (namely, the outer circumferential surface) of the sliding part of the pivot plate slides on the support surface (namely, the inner circumferential surface) of the receiving part.

In this case, a plurality of reinforcing ribs are preferably formed on the inner circumferential surface of the sliding part, and the grooves on the sliding surface of the sliding part may be formed in positions facing the reinforcing ribs.

With this configuration, since deformation produced in the sliding part of the pivot plate is reduced, the sliding surface (namely, the outer circumferential surface) of the sliding part uniformly contacts the support surface (namely, the inner circumferential surface) of the receiving part. As a result, chattering vibration generated in the mirror can be reduced. When the pivot plate is integrally molded with a synthetic resin or the like, if the reinforcing ribs are formed on an inner circumferential surface of the sliding part, a "sink" may be easily produced on the sliding surface (the outer circumferential surface) of the sliding part due to uneven thickness. However, if the reinforcing ribs are formed in a position facing the grooves on the sliding surface, such a "sink" can be utilized as part of the grooves. Therefore, it is not necessary to take a measure to deal with the "sink".

Various aspects and advantages of the present invention described above, and other advantages and further features will become more apparent from the following exemplary and non-limited description in detail of the present invention, with reference to the accompanying drawings.

### BRIEF DESCRIPTION OF THE DRAWINGS

FIG. 1 is an exploded perspective view showing a mirror angle adjusting device according to an embodiment of the present invention.
FIG. 2 is an elevational view showing a pivot plate.
FIG. 3A is a cross sectional view showing the pivot plate when cut along the line X1-X1 in Fig. 2. FIG. 3B is a cross sectional view showing the pivot plate when cut along the line X2-X2 in Fig. 2.
FIG. 4 is an exploded perspective view showing an actuator.
FIG. 5A and FIG. 5B are views each showing a housing constituting the actuator. FIG. 5A is a partially broken perspective view. FIG. 5B is a partially enlarged view of FIG. 5A.
FIG. 6 is an elevational view showing the housing constituting the actuator.
FIG. 7A is a cross sectional view showing the housing when cut along the line X3-X3 in Fig. 6. FIG. 7B is a cross sectional view showing the housing when cut along the line X4-X4 in Fig. 6.
FIG. 8 is a schematic view illustrating an arrangement of grooves.
FIG. 9 is a cross sectional view showing a cover and a pressing unit each constituting the actuator.
FIG. 10 is a perspective view showing a rod and a worm wheel each constituting the actuator.
FIG. 11A is a cross sectional view showing a gear receiving part of the housing and a gear holding part of the cover. FIG. 11B is a cross sectional view showing the rod and the worm wheel.
FIGS. 12A and FIG. 12B are cross sectional views each illustrating operations of the mirror angle adjusting device according to the embodiment of the present invention.
FIG. 13 is an exploded perspective view showing a mirror angle adjusting device according to a conventional technology.
FIG. 14 is a perspective view showing a mirror angle adjusting device according to another conventional technology.

### BEST MODES FOR CARRYING OUT THE INVENTION

The best modes for carrying out the present invention are described in detail with reference to the drawings. In the following embodiment, an example is described assuming that a mirror angle adjusting device is built in a rear-view outer mirror provided on a lateral side of an automobile. The terms "front and rear", "right and left" and "up and down" used in this specification are based on the state where the outer mirror is provided on a lateral side of an automobile.

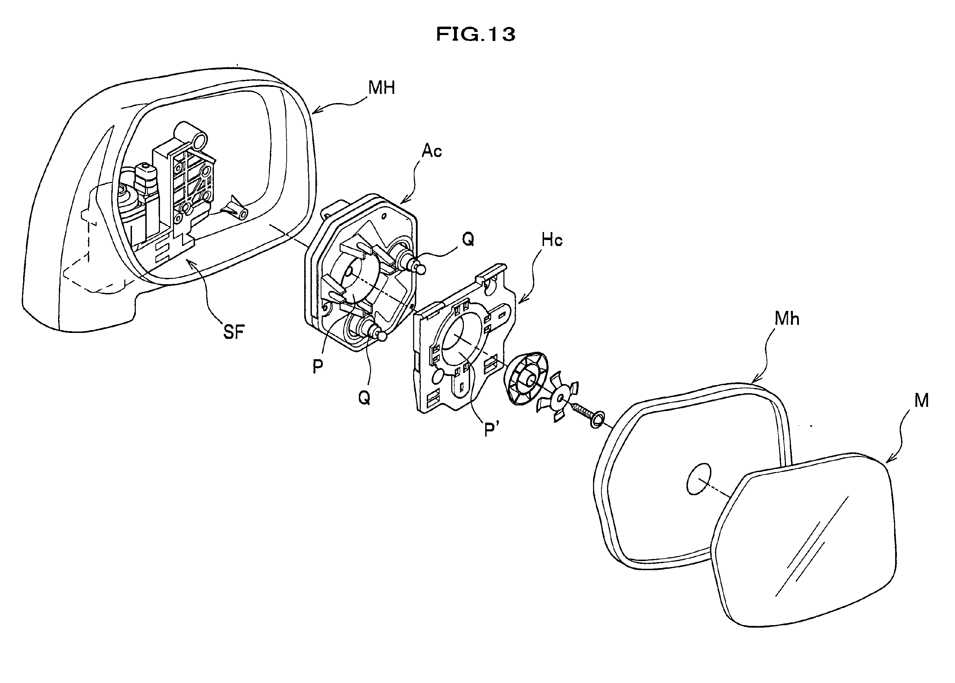

The mirror angle adjusting device according to the embodiment of the present invention includes, as shown in FIG. 1, a pivot plate H attached to a back side (in this embodiment, on a front side) of a mirror M for holding the mirror M via a mirror holder not shown; and an actuator A for holding the pivot plate H. It is to be noted that the actuator A is fixed to a mirror housing MH, or a support frame SF (see FIG. 13) integrally mounted on the support frame SF.

### (Pivot Plate)

The pivot plate H includes an annular housing part H1 formed in the center thereof; an inner annular part H2 encircling the housing part H1; an outer annular part H3 encircling the inner annular part H2; a plurality of mirror mounting parts H4,H4,... extending outside the outer annular part H3; a plurality of connecting rods H5,H5,... for connecting the housing part H1 and the inner annular part H2; and a plurality of reinforcing ribs H6,H6,... for connecting the inner annular part H2 and the outer annular part H3.

The housing part H1 has a torus shape, and an inner circumferential surface thereof is molded in a spherical surface shape. It is to be noted that a support cap A41 described hereinafter is fitted inside the housing part H1 by insertion.

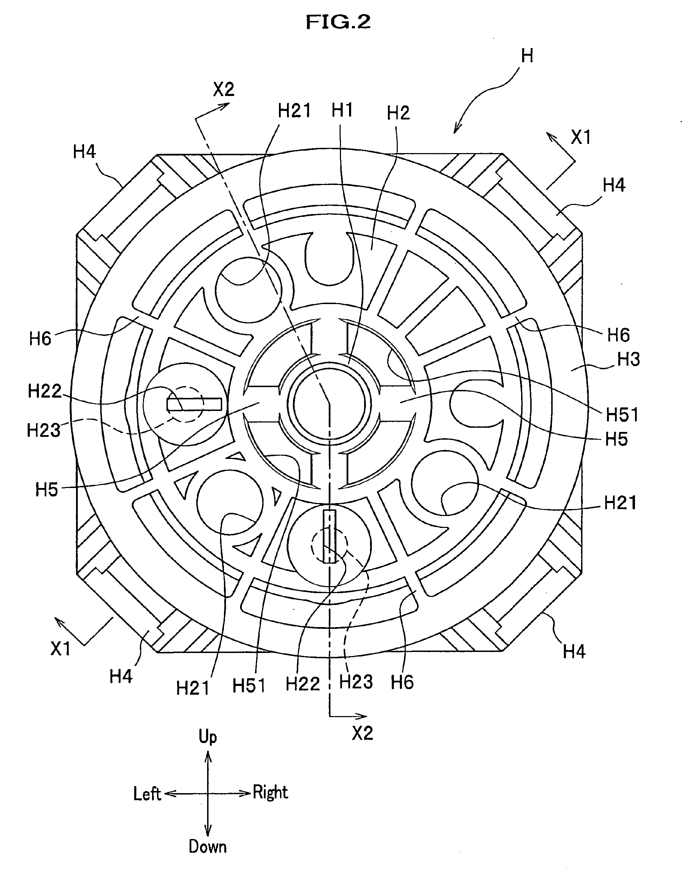

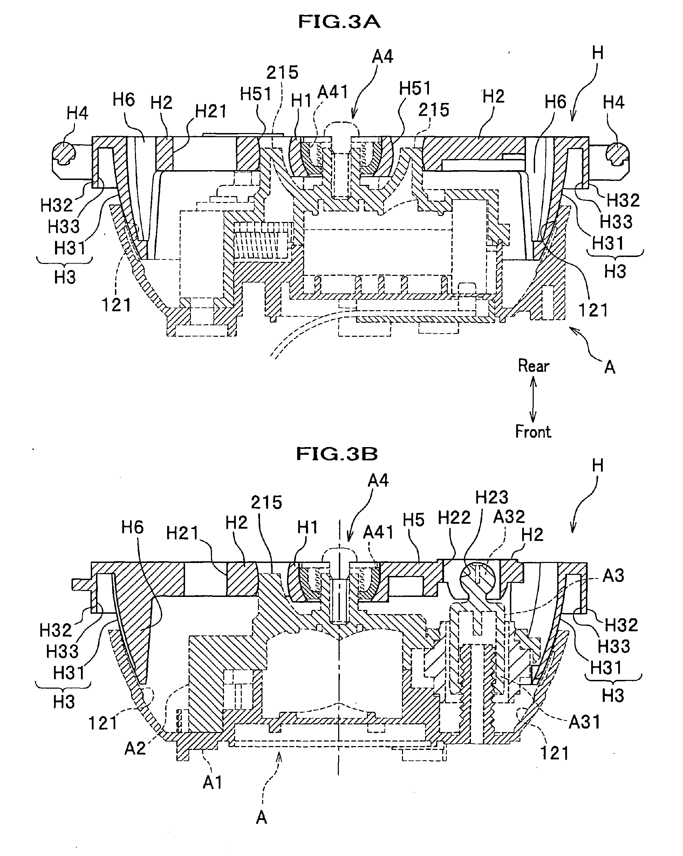

A plurality of first through holes H21,H21,... in a circular shape and two second through holes H22,H22,... in a rectangular shape are formed in the inner annular part H2, as shown in FIG. 2. An engaging part H23 with an inner surface thereof molded in a spherical shape is formed on the back side of the second through hole H22 (on the front side), as shown in FIG. 3B, which is a cross sectional view when cut along the line X2-X2 in FIG. 2.

The outer annular part H3 includes an annular sliding part H31 and an extending part H32 encircling the sliding part H31, as also shown in FIG. 3A, which is a cross sectional view when cut along the line X1-X1 in Fig. 2.

The sliding part H31 is in a torus shape as shown in FIG. 1, and has an outer circumferential surface (which may also be referred to as a "sliding surface" hereafter) is formed in a spherical surface. A plurality of grooves 311,311,... running toward the actuator A are spaced out in a circumferential direction. The grooves 311 are formed in positions facing respective reinforcing ribs H6. That is, the grooves 311 are formed along the reinforcing ribs H6. Each of the grooves 311 stores therein a lubricant such as grease.

Each of the grooves 311 shown in the figure is linear. However, each of the grooves 311 may be, for example, curved, corrugated or zigzag. Further, in the embodiment, the plurality of grooves 311,311,... running in a direction toward the actuator A are formed, however, a single groove may be formed in spirals along a circumferential direction of the sliding part H31.

The extending part H32 is, as shown in FIG. 3A and FIG. 3B, molded to have a cross section thereof in a substantially inverted L shape, so that a housing groove H33 is formed between the extending part H32 and the sliding part H31 of the sliding surface.

The mirror mounting part H4 shown in FIG. 1 is engaged with a hook not shown, which is formed on a back side of a mirror holder not shown or on a back side of the mirror M. In this embodiment, the mirror mounting part H4 is provided in a protruding manner on an outer circumferential surface of the extending part H32.

The connecting rods H5 are placed so as to partition a space in an annular ring shape provided between the housing part H1 and the inner annular part H2. The connecting rods H5 constitute an opening H51 in a fan-like shape (see FIG. 2), together with the housing part H1 and the inner annular part H2.

The reinforcing ribs H6 connect the inner annular part H2 and the outer annular part H3, and also reinforce the sliding part H31. In this embodiment, the reinforcing ribs H6 are placed so as to partition a space in a circular ring shape provided between the inner annular part H2 and the outer annular part H3. Further, as shown in FIG. 3B, each of the reinforcing ribs H6 has a substantially triangular shape, and an end (an anterior end) thereof extends to an end (an anterior end) of the sliding part H31.

The pivot plate H can be molded with a synthetic resin, for example, polyethylene, polypropylene (PP) and polyacetal (POM). In this case, the housing part H1, the inner annular part H2, the outer annular part H3, the mirror mounting part H4, the connecting rods H5, and the reinforcing ribs H6 can be integrally molded.

### (Actuator)

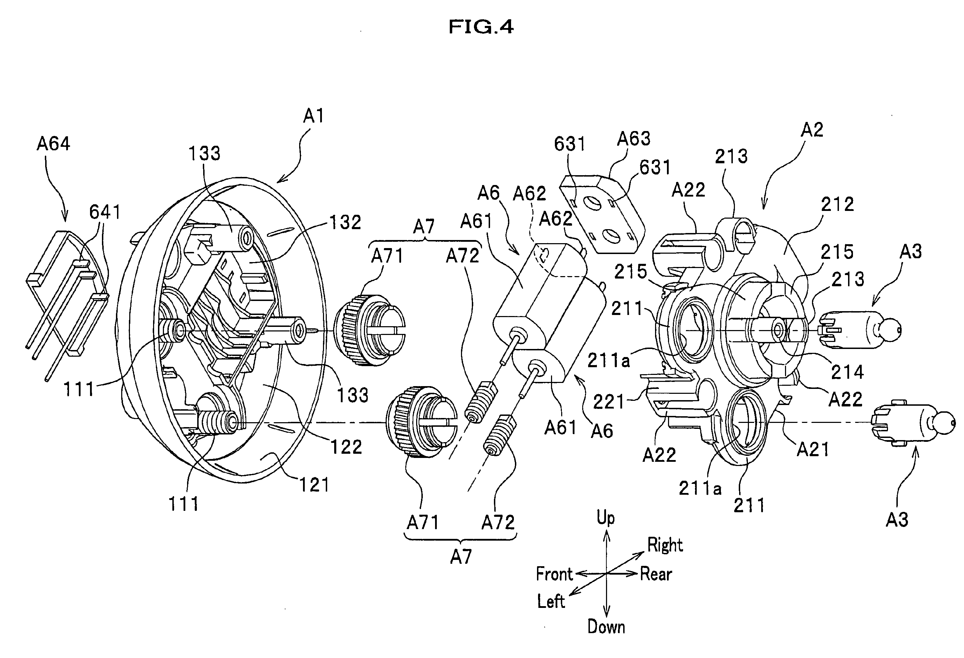

The actuator A includes, as shown in FIG. 1, a housing A1 in a bowl shape; a cover A2 fixed to the housing A1; a pair of rods A3,A3 for pushing and pulling the pivot plate H; a pressing measure A4 for pressing the pivot plate H onto the housing A1; and a pair of position sensors A5,A5 for measuring an inclination of the pivot plate H. The actuator A further includes, as shown in FIG. 4, a pair of motors A6,A6 for providing a driving force to the rods A3,A3; and a pair of gears A7,A7 for transmitting the driving force of the motors A6,A6 to the rods A3,A3.

The housing A1 includes, as shown in FIG. 5A, a bottom A11; an annular peripheral wall A12 formed on an outer circumferential edge of the bottom A11; and an island part A13 formed on an inner circumference side of the bottom A11.

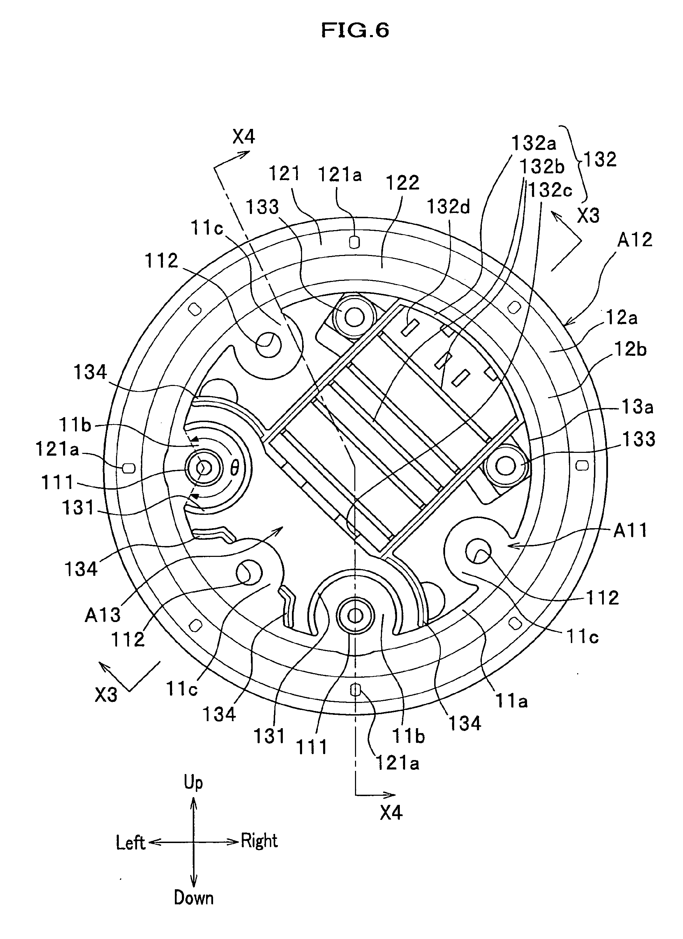

The bottom A11 includes, as shown also in FIG. 6, an annular area 11a; a pair of gear setting areas 11b,11b formed in an indenting manner into the island part A13 on an inner circumferential surface of the annular area 11a; and a plurality of cover setting areas 11c,11c,... Of the pair of gear setting areas 11b, 11b, one gear setting area 11b is formed on a lowermost part of the annular area 11a. The other gear setting area 11b is formed obliquely upward of the former gear setting area 11b. Each gear setting area 11b has an arc-shaped outer edge, and a male screw part 111 at the center thereof in a protruding manner (see FIG. 5A). A mounting hole 112 is formed at the center of each cover setting area 11c. It is to be noted that the mounting hole 112 is formed in a position corresponding to the first through hole H21 of the pivot plate H shown in FIG. 2.

The peripheral wall A12 has, as shown in FIG. 5A, two annular areas 121, 122 on the front side and the rear side. The annular area 121 on the rear side is hereinafter referred to as a "receiving part 121", and the annular area 122 on the front side, a "lubricant storing part 122". That is, the circular receiving part 121 is formed on an edge of the housing A1 on the back side, and the lubricant storing part 122 is formed adjacent to the receiving part 121.

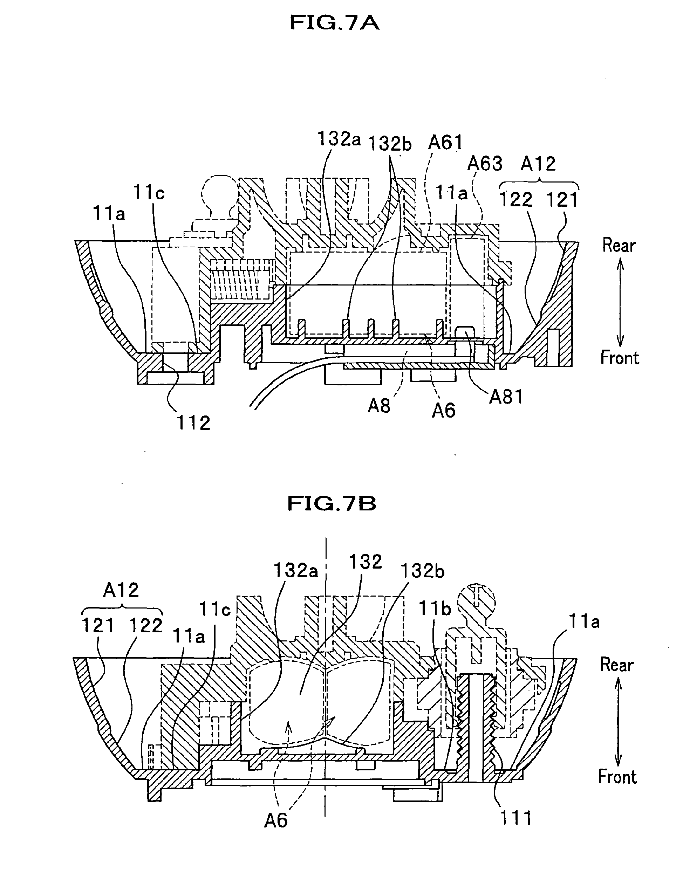

The receiving part 121 inclinably supports the sliding part H31 (see FIG. 1) of the pivot plate H, has a torus shape, and is formed to have an inner circumferential surface (which may also be referred to as a "supporting surface" hereinafter) in a spherical shape, as shown in FIG. 7A and FIG. 7B. It is to be noted that FIG. 7A is a cross sectional view when cut along the line X3-X3 in Fig. 6. FIG. 7B is a cross sectional view when cut along the line X4-X4 in Fig. 6. Herein, a radius of the spherical surface constituting the support surface of the receiving part 121 is substantially the same as that of the spherical surface constituting the sliding surface of the sliding part H31 (see FIG. 3A and FIG. 3B) of the pivot plate H. That is, the support surface of the receiving part 121 is slidably in contact with the sliding surface of the sliding part H31 (see FIG. 3A and FIG. 3B) of the pivot plate H.

As shown in FIG. 5A, a plurality of grooves 121a, 121a,··· running toward the lubricant storing part 122 are spaced out in a circumferential direction. Each of the grooves 311 stores therein a lubricant such as grease.

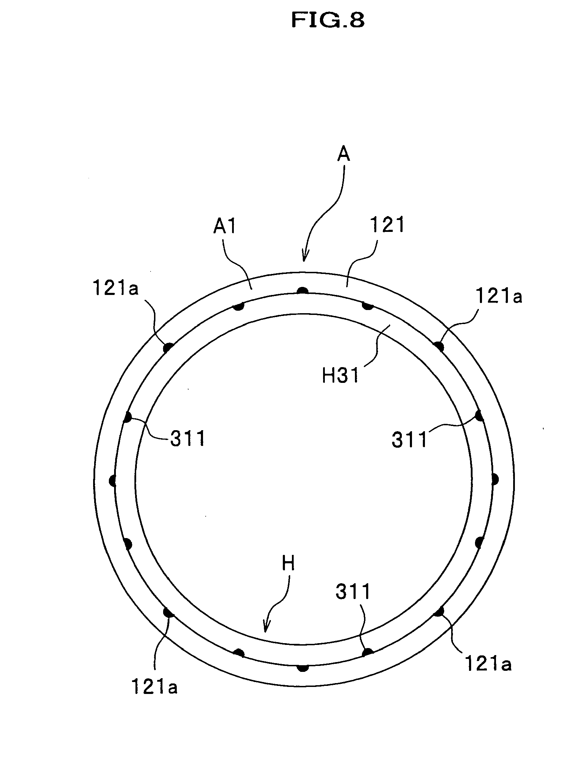

As shown in a schematic view of FIG. 8, each groove 121a of the receiving part 121 is placed between two grooves 311,311 which are adjacent to each other in a circumferential direction of the sliding part H31. That is, each groove 121a on the support surface of the receiving part 121 is formed in a position displaced from each groove 311 formed on the sliding surface of the sliding part H31.

Each groove 121a shown in the figure is linear. However, each groove 121a may be, for example, curved, corrugated or zigzag. Further, in the embodiment, the plurality of grooves 121a, 121a,... running in a direction toward the lubricant storing part 122 are formed, however, a single groove 121a may be formed in spirals along a circumferential direction of the receiving part 121.

The lubricant storing part 122 shown in FIG. 5A is formed adjacent to the support surface of the receiving part 121. The lubricant storing part 122 has a torus shape, and an inner circumferential surface thereof in a spherical shape. Since an inner diameter of the inner circumferential surface is larger than that of the support surface of the receiving part 121, a step is formed at a junction between the receiving part 121 and the lubricant storing part 122, as shown in FIG. 7A and FIG. 7B. It is to be noted that a lubricant such as grease is applied onto the lubricant storing part 122. Every time the pivot plate H (see FIG. 1) is inclined (that is, every time the support surface of the sliding part H31 (see FIG. 1) slides on the support surface of the receiving part 121), the lubricant applied onto the lubricant storing part 122 is directly fed from the lubricant storing part 122 to the support surface of the receiving part 121 and the sliding surface of the sliding part H31. Or the lubricant is fed via each of the grooves 121a of the receiving part 121 and each of the grooves 311,311 (see FIG. 1) of the sliding part H31 (that is, after the lubricant is once stored), to the support surface of the receiving part 121 and the sliding surface of the sliding part H31. This allows the pivot plate H to keep operating with a smooth inclination for a long period of time.

The island part A13 is, as shown in FIG. 5A, raised toward the rear side as compared to the annular area 11a of the bottom A11, and has an outer edge (an outer circumferential surface) 13a facing the peripheral wall A12, leaving a gap (a groove) therebetween. That is, as shown in FIG. 6, the outer edge 13a of the island part A13 faces the peripheral wall A12 across the annular area 11a of the bottom A11.

Herein, the island part A13 includes, as shown in FIG. 5A, a pair of gear receiving parts 131, 131 formed corresponding to a pair of male screws 111,111; a motor housing part 132 for housing the two motors A6,A6 (see FIG. 2); a pair of sensor mounting parts 133, 133 formed on both sides of the motor housing part 132; and a plurality of support walls 134,134,... formed around each of the gear receiving parts 131.

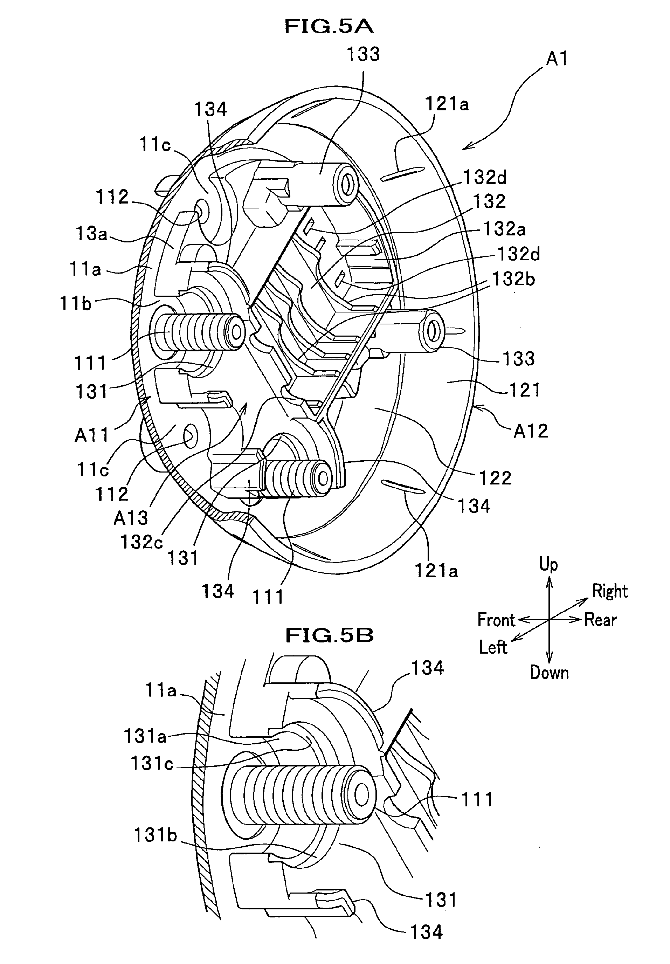

Each gear receiving part 131 supports an outer circumferential surface of a front end of the worm wheel A71 (see FIG. 4) described hereinafter, and is formed around the male screw 111 as shown in FIG. 5B. In this embodiment, the gear receiving part 131 has a substantially C shape (a circular arc shape), and is formed on an inner circumferential side of the annular area 11a of the bottom A11 . With this configuration, a volume of the gear receiving part 131 can be made smaller, as compared to when the gear receiving part 131 is formed in an annular ring shape without any missing portion. As a result, the housing A1 can be downsized. Further, even if water should get into the actuator A, there is no possibility that water remains on an inner circumferential part of the gear receiving part 131 (that is, an area around the male screw 111), because the gear receiving part 131 is not formed in a perfect annular ring shape.

A configuration of the gear receiving part 131 is described further in detail. The gear receiving part 131 includes a first circular arc surface 131a facing the outer circumferential surface of the male screw 111; a second circular arc surface 131b whose outer circumferential side faces the outer circumferential surface of the male screw 111; a third circular arc surface 131c formed between the first circular arc surface 131a and the second circular arc surface 131b. It is desirable that a central angle of each of the circular arc surfaces 131a, 131b, 131c (that is, a central angle θ of the gear receiving part 131 (see FIG. 6)) is larger than 180 degrees and smaller than 360 degrees. With this configuration, the worm wheel A71 can be stably supported, and consequently, a "wobble" in a horizontal or vertical direction can be reduced, which may occur during rotation of the worm wheel A71 (see FIG. 4). It is to be noted that each of the circular arc surfaces 131a,131b,131c may be provided at least in a position facing the worm wheel A71 across the male screw 111.

The motor housing part 132 is, as shown in FIG. 6, formed on a part ranging from a central portion through an upper right portion of the island part A13. In this embodiment, the motor housing part 132 includes a frame 132a in a substantially rectangular shape; and a plurality of ribs 132b, 132b, .. formed inside the frame 132a. An upper side of the frame 132a is formed in a circular arc shape along the outer circumferential edge 13a of the island part A13. A lower side of the frame 132a is formed to have two notches 132c, into which a worm A72 described hereinafter is inserted. It is to be noted that the rib 132b is molded in accordance with an outline of the motor A6 (see FIG. 4). Further, the motor housing part 132 has three terminal holes 132d formed in an upper portion thereof. It is to be noted that, when the terminal hole 132d is provided in an upper potion of the housing A1, even if water should get into the actuator A, terminals and the like of the motor A6 (see FIG. 4) are free from being soaked in water.

The sensor mounting part 133 shown in FIG. 5A houses various components constituting the position sensor A5 (see FIG. 1), and is formed in a tubular shape in this embodiment. As shown in FIG. 6, of the pair of sensor mounting parts 133,133, one sensor mounting part 133 is formed on an uppermost part of the island part A13, and the other sensor mounting part 133 is formed obliquely downward of the former sensor mounting part 133. Herein, a line segment connecting one male screw 111 and one sensor mounting part 133, which are positioned above and below across the motor housing part 132, has an orthogonal relation with a line segment connecting the other male screw 111 and the other sensor mounting part 133, which are positioned left and right across the motor housing part 132.

Two smaller support walls 134 support the cover A2 (see FIG. 4) hereinafter described. In this embodiment, two larger and two smaller support walls 134 are formed at two places, respectively.

It is to be noted that the housing A1 can be molded with a synthetic resin, for example, polyethylene, acrylonitrile -butadiene-styrene resin (ABS resin), polybutylene terephthalate resin (PBT resin) and polyamide (PA). In this case, the bottom A11, the peripheral wall A12 and the island part A13 can be integrally molded.

The cover A2 shown in FIG. 4 includes a main portion A21 for covering the island part A13 (see FIG. 5A) of the housing A1; and a plurality of legs A22,A22,... formed around the main portion A21.

The main portion A21 includes a pair of gear holding parts 211,211 formed corresponding to the gear receiving parts 131, 131 (see FIG. 5A); a motor cover 212 for covering the motor housing part 132; a pair of ring parts 213,213 formed corresponding to the sensor mounting parts 133, 133; a boss 214 provided on a rear side of the motor cover 212 in a protruding manner; and four stoppers 215, 215, ... provided around the boss 214.

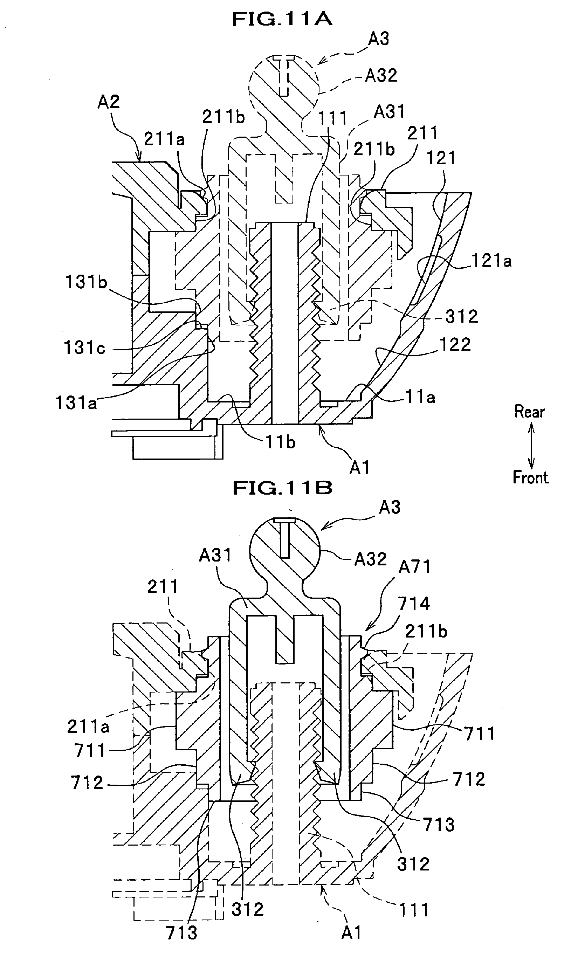

The gear holding part 211 primarily holds the worm wheel A71 hereinafter described. The gear holding part 211 holds the worm wheel A71 so that the worm wheel A71 will not be pulled out in its central axis direction, but can freely rotate about its central axis. The gear holding part 211 has a circular opening 211a formed therein. As shown in FIG. 11A, an annular step 211b having a larger diameter than that of the opening 211a is formed on a peripheral edge on the housing A1 side of the opening 211a.

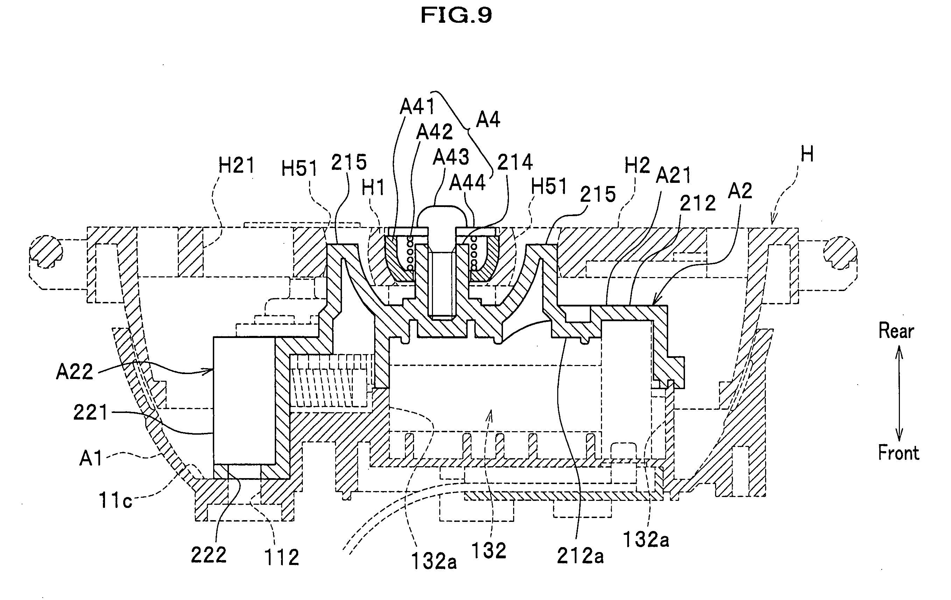

As shown in FIG. 9, a cover-side motor housing part 212a is provided in a concave manner corresponding to the motor housing part 132, on the housing A1 side of the motor cover 212. When the motor cover 212 covers the motor housing part 132, a substantially watertight space can be formed therein.

Each ring part 213 shown in FIG. 4 is formed on an outer edge of the main portion A21, and is provided about the sensor mounting part 133 (see FIG. 1), when the cover A2 is mounted on the housing A1.

The boss 214 is formed in a cylindrical shape having a bottom. As shown in FIG. 9, a screw A43 for holding the support cap A41 is screwed into the boss 214.

Each stopper 215 shown in FIG. 4 prevents the pivot plate H (see FIG. 1) from rotating in a circumferential direction of the receiving part 121. When the pivot plate H is mounted on the actuator A, a tip of the stopper 215 is inserted into an opening H51 (see FIG. 2) of the pivot plate H. It is to be noted that, as shown in FIG. 1, in a state where the cover A2 is mounted on the housing A1, the stopper 215 is surrounded by the receiving part 121. Thus, if the stopper 215 is formed on an inner circumferential side of the housing A1, it becomes possible to effectively utilize a space inside the housing A1, and to eventually downsize the mirror angle adjusting device.

The leg A22 shown in FIG. 4 is formed in a position corresponding to the cover setting area 11c (see FIG. 5A and FIG. 5B) of the housing A1. The leg A22 includes a peripheral wall 221 in a substantially C shape, and, as shown in FIG. 9, has a screw hole 222 communicating with the mounting hole 112 of the housing A1, on a bottom thereof. To fix the cover A2 on the housing A1, a screw not shown may be inserted into the screw hole 222 of the cover A2 and the mounting hole 112 of the housing A1 from the rear side, and a screw nut not shown may be screwed into a stem of the screw protruding on the front side. It is to be noted that a position of the mounting hole 112 of the housing A1 corresponds to that of the first through hole H21 of the pivot plate H, so that a tool not shown can be inserted into the leg A22 from the first through hole H21.

It is to be noted that the cover A2 can be molded with a synthetic resin, for example, polyethylene, acrylonitrile -butadiene-styrene resin (ABS resin), polybutylene terephthalate (PBT resin) and polyamide (PA). In this case, the main portion A21 and the leg A22 can be integrally molded.

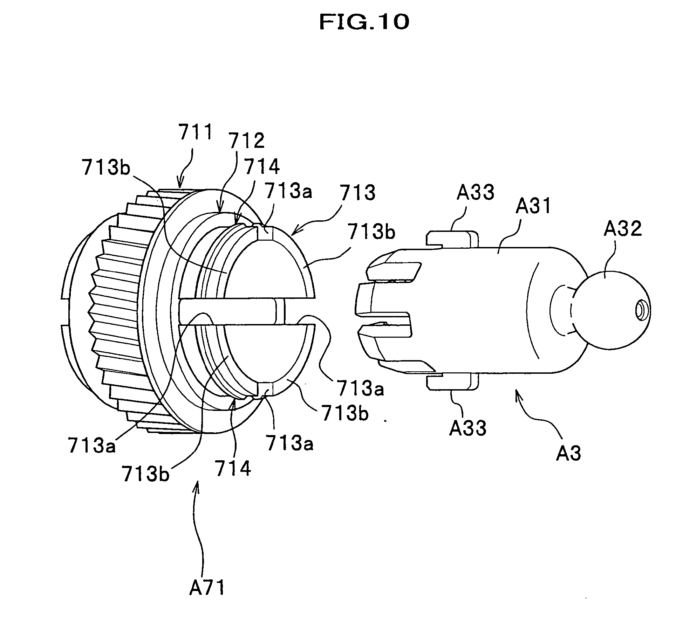

The rod A3 shown in FIG. 1 moves in the front and rear directions to push and pull the pivot plate H. As shown in FIG. 10, the rod A3 includes a tubular part A31; a pivot A32 formed at a tip of the tubular part A31; and a pair of flanges A33,A33 provided on an outer circumferential surface of the tubular part A31 in a protruding manner.

The tubular part A31 has a cylindrical shape, and, as shown in FIG. 11B, is provided about the male screw 111 of the housing A1. It is to be noted that a base end of the tubular part A31 is divided into a plurality of portions by a plurality of slits (see FIG. 10) . An inner circumferential surface of each of the plurality of portions has a claw 312, which is screwed into a screw thread of the male screw 111. Hence, when the tubular part A31 is rotated about the center axis of the male screw 111, the pivot A32 moves forward or backward along an axial direction of the male screw 111.

The pivot A32 is molded to have an outer surface in a spherical surface shape, and engages with an engaging part H23 of the pivot plate H shown in FIG. 3B. In this embodiment, the pivot A32 engages with the engaging part H23 in a state where the pivot A32 cannot be pulled out. Meanwhile, the outer surface of the pivot A32 is slidably in contact with an inner surface of the engaging part H23.

In this embodiment, of the pair of rods A3,A3 shown in FIG. 1, if one rod A3 provided in a lower part of the housing A1 is moved forward and backward, the pivot plate H (namely, the mirror M) is inclined upward and downward centering about the housing part H1. If the other rod A3 is moved forward and backward, the pivot plate H (namely, the mirror M) is inclined rightward and leftward centering about the housing part H1.

The pressing measure A4 shown in FIG. 1 presses the pivot plate H on the front side (namely, toward the actuator A), and joins the pivot plate H with the actuator A while keeping on pressing. The pressing measure A4 includes the support cap A41 inserted into the housing part H1 of the pivot plate H to fit in therewith; a pressing member A42 for applying pressure to the support cap A41; and the screw A43 screwed into the boss 214 of the actuator A, and a washer A44 provided about the screw A43.

The support cap A41 has a torus shape, and has an outer circumferential surface molded in a spherical surface shape. As shown in FIG. 9, a radius of the spherical surface constituting the outer circumferential surface of the support cap A41 is substantially the same as that of the spherical surface constituting the inner circumferential surface of the housing part H1 of the pivot plate H. That is, the outer circumferential surface of the support cap A41 is slidably in contact with the inner circumferential surface of the housing part H1 of the pivot plate H.

The pressing member A42 in a compressed state is placed between the support cap A41 and the washer A44, and presses the support cap A41 toward the actuator A with a restoring force thereof from the compression. In this embodiment, a coil spring is used as the pressing member A42, however, it is needless to say that the pressing member A42 is not limited to this.

The washer 44 is formed to have a size and a shape substantially the same as those of an edge face on the rear side of the support cap A41. This prevents the support cap A41 from being pulled out of the housing part H1.

A configuration of the pressing measure A4 is not limited to that shown in the figure, as long as the pressing measure A4 can press the support cap A41 toward the actuator A. For example, though not shown in the figure, a disc spring may be used as the pressing member A42. In this case, the disc spring is provided in a position of the washer 44.

The position sensor A5 shown in FIG. 1 is provided to detect an inclination of the pivot plate H, and is attached to the sensor mounting part 133 in this embodiment. A configuration and a type of the position sensor A5 are not specifically limited, however, the position sensor A5 having a contact terminal is used in this embodiment. The contact terminal is attached to the sensor mounting part 133 in a state where the contact terminal is pressed onto the pivot plate H. A tip of the contact terminal constantly contacts the front side (the back side) of the pivot plate H, and moves forward and backward following an inclining movement of the pivot plate H. Thus, a state (an inclination) of the pivot plate H can be detected by measuring how far ahead the contact terminal moves forward and backward (protrudes).

The motor A6 shown in FIG. 4 includes a motor body A61; and a pair of male terminals A62,A62 protruding from the motor body A61. The pair of male terminals A62,A62 is connected to an adaptor A63. The adaptor A63 is placed between the pair of motors A6,A6 provided in parallel with each other and a terminal plate A64 attached on the front side of the housing A1. On a surface of the adaptor A63 facing the pair of motors A6,A6, four female terminals 631 are formed, which are respectively connectable to four male terminals A62 in total for the pair of motors A6,A6. On a surface of the adaptor A63 facing the motor housing 132, three female terminals not shown corresponding to the terminal hole 132d (see FIG. 5A) are formed. It is to be noted that one of the two female terminals 631,631 connected to the male terminals A62,A62 for one motor A6 is short circuited to one of the two female terminals 631,631 connected to the male terminals A62,A62 for the other motor A6, inside the adaptor A63.

Each gear A7 shown in FIG. 4 includes the worm wheel A71 provided about the male screw 111 of the housing A1; and the worm A72 attached to an output axis of the motor A6. The worm A72 meshes with a gearwheel 711 (see FIG. 10) of the worm wheel A71 to transmit torque of the motor A6 to the worm wheel A71.

The worm wheel A71 transmits the torque of the motor A6 transmitted from the worm A72 to the rod A3, and is provided about the male screw 111 with a clearance, into which the rod A3 can be fitted, between an inner circumferential surface of the worm wheel A71 and an outer circumferential surface of the male screw 111.

A configuration of the worm wheel A71 is described further in detail. The worm wheel A71 includes, as shown in FIG. 10, the annular gearwheel 711 with cogs formed on an outer circumferential surface thereof; an outer cylinder 712 formed on an inner circumferential surface side of the annular gearwheel 711; an inner cylinder 713 formed on an inner circumferential surface side of the outer cylinder 712; and a stop part 714 formed on an outer circumferential surface of a rear end part of the inner cylinder 713.

The outer cylinder 712 has a front end part and a rear end part further protruding from the gearwheel 711 (see FIG. 11B), and an outer circumferential surface of the protruding part is formed in a cylindrical surface shape. More than half of the cylindrical surface of the front end part of the outer cylinder 712 is slidably in contact with the second circular arc surface 131b of the gear receiving part 131 of the housing A1 shown in FIG. 5B (see FIG. 11A and FIG. 11B). All of the cylindrical surface of the rear end part of the outer cylinder 712 is slidably in contact with the annular step 211b of the cover A2 shown in FIG. 11A.

The inner cylinder 713 has, as shown in FIG. 10, a front end part and a rear end part further protruding from the outer cylinder 712, and an outer circumferential surface of the protruding part is formed in a cylindrical surface shape. The inner cylinder 713 is divided into a plurality of (in this embodiment, four) pieces 713b,713b... by a plurality of slits 713a,713a,... formed along a center axis direction thereof. More than half of the cylindrical surface of the front end part of the inner cylinder 713 is slidably in contact with the first circular arc surface 131a of the gear receiving part 131 of the housing A1 shown in FIG. 5B (see FIG. 11A and FIG. 11B). All of the cylindrical surface of the rear end part of the inner cylinder 713 is slidably in contact with the opening 211a of the cover A2 shown in FIG. 11A. It is to be noted that, as shown in FIG. 10, the slits 713a are formed in series along the center axis of the inner cylinder 713. The slits 713a engage with the flange A33 of the rod A3.

The stop part 714 includes, as shown in FIG. 10, peripheral protrusions which protrude from a circumferential surface of the inner cylinder 713 on an outer surface of the rear end part of the inner cylinder 713. The stop part 714 is, as shown in FIG. 11B, placed with a peripheral edge of the opening 211a of the gear holding part 211. This prevents the worm wheel A71 from being pulled out from the opening 211a. Though not shown in the figure, a groove provided in a recessed manner along a circumferential direction of the inner cylinder 713 may be used as the stop part 714. In this case, a linear protrusion to be fitted in with the groove described above may be formed on the opening 211a of the gear holding part 211.

To mount the worm wheel A71 having a configuration described above on the actuator A, a rear end part of the worm wheel A71 may be held on the gear holding part 211 of the cover A2, and then, the cover A2 may be fixed in a predetermined position on the housing A1. To engage the rear end part of the worm wheel A71 with the gear holding part 211 of the cover A2, the rear end part of the inner cylinder 713 of the worm wheel A71 may be inserted into the opening 211a of the gear holding part 211, while the rear end part of the inner cylinder 713 of the worm wheel A71 is elastically deformed toward inside. After that, the stop part 714 may be placed with the peripheral edge of the opening 211a of the gear holding part 211.

If a configuration of mounting the worm wheel A71 as described above is employed, just upon fitting the rear end part of the worm wheel A71 into the gear holding part 211 of the cover A2, the worm wheel A71 can be held in the gear holding part 211, in a state where the worm wheel A71 cannot be pulled out in a center axis direction (in front and rear directions), and also in a state where the worm wheel A71 can freely slide and rotate about the center axis (in a circumferential direction). This allows an axis alignment of the worm wheel A71 to be achieved easily and quickly, and also allows an operation of mounting the actuator A to be simplified. It is to be noted in this embodiment that, in the front end part of the worm wheel A71, more than half of the outer circumferential surface of the inner cylinder 713 is in contact with the first circular arc surface 131a of the gear receiving part 131 shown in FIG. 5B; and more than half of the outer circumferential surface of the outer cylinder 712 is in contact with the second circular arc surface 131b of the gear receiving part 131 shown in FIG. 5B. This prevents the front end part of the worm wheel A71 from moving in right/left and up/down directions.

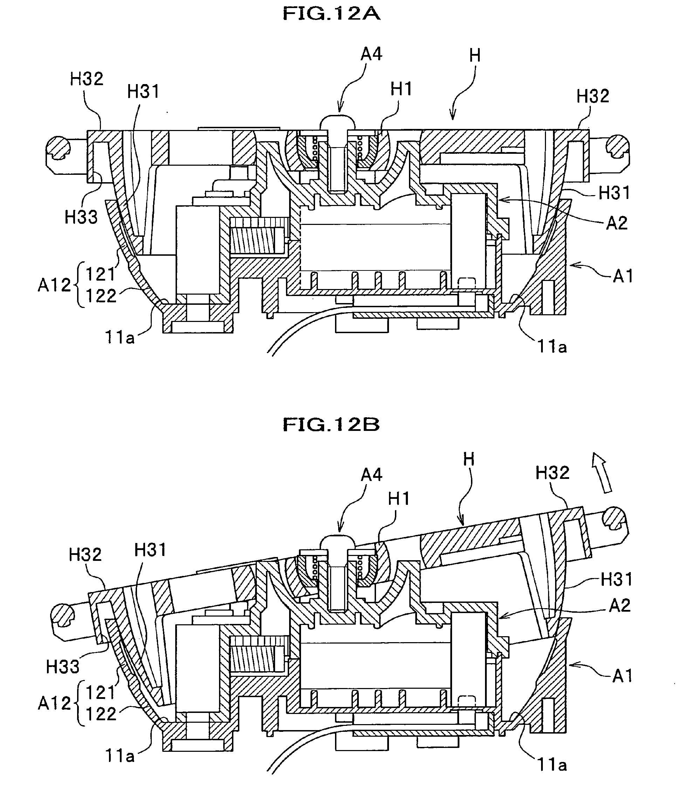

Operations of the actuator A are described herein with reference to FIG. 1 and FIG. 4. The motor A6 is rotated in a suitable direction by controlling a controller not shown.
Torque of the motor A6 is then transmitted via the worm A72 to the worm wheel A71. The worm wheel A71 thereby rotates about the male screw 111 of the rod A3. When the worm wheel A71 rotates, the rod A3 also rotates about the male screw 111, interlocking with the rotation of the worm wheel A71, because the flange A33 (see FIG. 10) of the rod A3 is engaged with the slits 713a (see FIG. 1) of the worm wheel A71, in a state where the flange A33 cannot rotate relative to the slits 713a. Additionally, the rod A3 moves forward or backward along the axial direction of the male screw 111, while rotating about the male screw 111, because the claw 312 (see FIG. 11) of the rod A3 is screwed into a thread screw of the male screw 111. As a result, the rod A3 pushes and pulls the pivot plate H forward or backward, and the pivot plate H is thus inclined in relation to the actuator A (see FIG. 12A and FIG. 12B).

In the mirror angle adjusting device having a configuration as described above, as shown in FIG. 1, the rods A3,A3 of the actuator A for pushing and pulling the pivot plate H are provided inside the receiving part 121 for supporting the pivot plate H, so that a load acting on the mirror M mainly acts on the receiving part 121. Therefore, the mirror M can be stably held, even if the rod A3 and the pivot plate H are loosely fitted in with each other, or the rod A3 itself bears a dimension error or a mounting error. Further, in the configuration, the annular sliding part H31 formed on the pivot plate H is constantly in contact with the annular receiving part 121 formed on the housing A1, so that such a contact part will not allow water and dust to enter therein. Therefore, a waterproof measure around the rod A3, which is provided inside the receiving part 121, can be omitted or simplified.

Stability of the mirror increases as the receiving part 121 becomes larger, and it is thus desirable to make a size of the receiving part 121 as large as possible. However, from a viewpoint of downsizing the mirror angle adjusting device, it is desirable to make a size of the housing A1 as small as possible. In this embodiment, the housing A1 is bowl-shaped, and the receiving part 121 is formed on an edge of the housing A1 so as to make maximum use of the size of the housing A1. This can ensure a necessary size of the receiving part 121 for stably holding the pivot plate H, and can also downsize the housing A1, which eventually enables the mirror angle adjusting device to be downsized.

In the mirror angle adjusting device, the plurality of grooves 121a,121a,... are formed on the support surface (the inner circumferential surface) of the receiving part 121 of the housing A1, and the plurality of grooves 311,311,... are also formed on the sliding surface (the outer circumferential surface) of the pivot plate H. Therefore, every time the pivot plate H (see FIG. 1) is inclined (that is, every time the support surface of the sliding part H31 (see FIG. 1) slides on the support surface of the receiving part 121), a lubricant applied onto the lubricant storing part 122 is directly fed from the lubricant storing part 122, or via each groove 121a of the receiving part 121 and each groove 311,311 (see FIG. 1) of the sliding part H31, to the support surface of the receiving part 121 and the sliding surface of the sliding part H31. This allows the pivot plate H to keep on operating with a smooth inclination for a long period of time. It is to be noted that, though not shown in the figure, even if the grooves are formed either on the support surface of the receiving part 121 of the housing A1 or on the sliding surface of the pivot plate H, the advantages as described above can be obtained.

In the mirror angle adjusting device, the plurality of reinforcing ribs H6,H6,... are formed on the inner circumferential surface of the sliding part H31. Therefore, deformation produced in the sliding part H31 becomes smaller. Further, chattering vibration generated in the mirror M (see FIG. 1) can be prevented, because the sliding surface (namely, the outer circumferential surface) of the sliding part H31 uniformly contacts the support surface (namely, the inner circumferential surface) of the receiving part 121 of the actuator A.

In the mirror angle adjusting device, each groove 311 on the sliding surface of the sliding part H31 is formed in a position facing each reinforcing rib H6 (that is, on the back side of each reinforcing rib H6). Therefore, even if a "sink" is produced on the sliding surface (the outer circumferential surface) of the sliding part H31 due to uneven resultant thickness when the pivot plate H is molded, such a "sink" can be utilized as part of the grooves 311. Hence, it is not necessary to take a measure to prevent the "sink".

The embodiment as an example for illustrating the present invention has been explained as aforementioned. However, various modifications and variations of the embodiment can be made as long as the modifications and variations do not depart from the spirit and scope of the present invention, which are defined in the claims attached hereto.

For example, in the embodiment described above, the bowl-shaped housing is used. However, the housing is not limited to this configuration, as long as the housing has an annular receiving part. The pivot plate may also have any shape as long as the pivot plate has an annular sliding part.

In the embodiment described above, the mirror angle adjusting device is exemplified having a configuration in which the sliding part H31 of the pivot plate H is fitted inside the receiving part 121 of the actuator A (see FIG. 12A and FIG. 12B) . However, a receiving part of an actuator may be fitted inside a sliding part of a pivot plate. Namely, the mirror angle adjusting device may have a configuration in which the outer circumferential surface of the receiving part of the actuator is in contact with the inner circumferential surface of the sliding part of the pivot plate. In this case, the outer circumferential surface of the receiving part operates as "the support surface", and the inner circumferential surface of the sliding part operates as "the sliding surface". Thus, if grooves capable of storing a lubricant are formed either on the support surface of the actuator (namely, the outer circumferential surface of the receiving part) or on the sliding surface of the pivot plate (namely, the inner circumferential surface of the sliding part), a contact part between the pivot plate and the actuator smoothly slide for a long period of time, and the pivot plate can be stably held.

Further, in the embodiment described above, the lubricant storing part 122 is formed in a position adjacent to the support surface of the receiving part 121 of the actuator A (see FIG. 5A). However, the configuration is not limited to this. Though not shown in the figure, a lubricant storing part for storing a lubricant can be formed, for example, in a position adjacent to the sliding part of the pivot plate H, either in addition to the lubricant storing part 122 of the actuator A or in place of the lubricant storing part 122 of the actuator A.

Though not shown in the drawings, the grooves capable of storing a lubricant may be formed either on the outer circumferential surface (namely, the support surface) of the support cap A41 for pressing the pivot plate H toward the actuator A or on the inner circumferential surface (namely, the sliding surface) of the housing part H1 of the pivot plate H. Further, a lubricant storing part may be formed on a part adjacent to the above-mentioned surfaces.

## Claims

1. A mirror angle adjusting device comprising:
a pivot plate attached to a back side of a mirror; and
an actuator slidably holding the pivot plate,
wherein grooves for storing a lubricant are formed at least either on a support surface of the actuate or a sliding surface of the pivot plate which is slidably in contact with the support surface.

2. A mirror angle adjusting device comprising:
a pivot plate attached to a back side of a mirror; and
an actuator slidably holding the pivot plate,
wherein grooves for storing a lubricant are formed both on a support surface of the actuator and on a sliding surface of the pivot plate which is slidably in contact with the support surface.

3. The mirror angle adjusting device according to Claim 2, wherein the grooves on the support surface are formed in a position displaced from the grooves formed on the sliding surface.

4. The mirror angle adjusting device according to any of Claims 1 to 3, wherein a lubricant storing part for to storing the lubricant is formed at least either on a portion adjacent to the support surface or on a portion adjacent to the sliding surface.

5. The mirror angle adjusting device according to any of Claims 1 to 3,
wherein the actuator has an annular receiving part, and the support surface is formed on an inner circumferential surface of the receiving part; and
wherein the pivot plate has an annular sliding part which is slidably in contact with the receiving part, and the sliding surface is formed on an outer circumferential surface of the sliding surface.

6. The mirror angle adjusting device according to Claim 5,
wherein the actuator has a lubricant storing part for storing a lubricant; and
wherein the lubricant storing part is formed on a portion adjacent to the receiving part.

7. The mirror angle adjusting device according to Claim 7,
wherein a plurality of reinforcing ribs are formed on the inner circumferential surface of the sliding part; and
wherein the grooves on the sliding surface of the sliding part are formed in positions facing the reinforcing ribs.

8. The mirror angle adjusting device according to any of Claims 1 to 3,
wherein the actuator has a support cap for pressing the pivot plate toward the actuator, and the support surface is formed on an outer circumferential surface of the support cap; and
wherein the pivot plate has a housing part for housing the support cap, and the sliding surface is formed on an inner circumferential surface of the housing part.
